# EUROPEAN PATENT APPLICATION

(11) **EP 4 765 181 A1**
(43) Date of publication of application: **24.06.2026**
(21) Application number: 24222203.2
(22) Date of filing: 20.12.2024
(51) Int. Cl.: H01H 9/16, H01H 23/02, H01H 9/18, H01H 11/00, H01H 23/04, H02G 3/12

(54) **INDICATOR DEVICE FOR WALL-MOUNTED SWITCHING DEVICE**

(71) Applicant: Berker GmbH & Co. KG, 66440 Blieskastel (DE)
(72) Inventor: Montini, Silvio, 25122 Brescia (IT)
(74) Representative: Hagergroup

(57) **Abstract**

An indicator device for a wall-mounted switching device (1), in particular for a single-rocker or double-rocker switching device, comprises a housing (20) having a main body (22), the main body (22) having a front face (24) provided with a window or opening (26). The indicator device further comprises a visual indicator (40) arranged within the main body (22) such as to face the window or opening (26). The housing (20) comprises at least one lug (28) which is connected to the main body (22) and which is removable from the main body (22).

## Description

### FIELD OF THE DISCLOSURE

### Technical Field

The present disclosure relates to an indicator device for wall-mounted switching devices, particularly for single-rocker or double-rocker switching devices. Specifically, the present disclosure pertains to an indicator device featuring a housing with at least a removable lug.

### BACKGROUND OF THE INVENTION

In the field of wall-mounted switching devices, it is common to incorporate visual indicators to provide users with a clear indication of the switch's status. These indicators are particularly useful in low-light conditions or for users with visual impairments. Known systems typically involve integrating a visual indicator within the switch housing or attaching it externally. One such approach is described in prior art document WO2011103976A1, which discloses an indicator device designed for wall-mounted switches. This document details a system where the indicator device is integrated into the switch housing and provides visual feedback through an opening or window on the switch's front face.

According to known systems like WO2011103976A1, the indicator device must be specifically designed to fit either a single rocker switch or a double rocker switch. This necessitates the production of at least two different variants of the indicator device, each tailored to the specific type of switch. The single rocker switch requires an indicator device of a particular size and configuration, while the double rocker switch demands a different design to accommodate the dual switching mechanism. This approach leads to increased manufacturing complexity and higher production costs, as separate molds and assembly processes are required for each variant. Additionally, it complicates inventory management and logistics, as manufacturers and suppliers must stock multiple versions of the indicator device.

Despite the substantial advances in the field of wall-mounted switching devices, there remains a need for a more versatile and cost-effective solution. It is therefore a technical problem underlying the present invention to provide an indicator device for wall-mounted switching devices that at least partially overcomes the disadvantages of known systems.

### SUMMARY OF THE DISCLOSURE

It is an object of this invention to provide an indicator device for wall-mounted switching devices that overcomes one or more of the disadvantages of known systems and is versatile in its use.

According to an embodiment, the subject matter pertains to an indicator device designed for a wall-mounted switching device, which could be either a single-rocker or double-rocker type. The indicator device includes a housing that features a main body. The main body has a front face that is equipped with a window or an opening. Additionally, the indicator device comprises a visual indicator positioned within the main body in such a manner that it faces the window or opening. A distinctive characteristic of this indicator device is that the housing includes at least one lug. This lug is connected to the main body and is designed to be removable from the main body.

The term "indicator device" refers to a component that provides a visual indication, often used to signal the status or operation of the switching device. The "housing" is the outer structure that encases the internal components of the indicator device. The "main body" is the central part of the housing that supports other elements. The "front face" is the surface of the main body that is oriented towards the user or the external environment. The "window or opening" is an aperture in the front face that allows the visual indicator to be visible. The "visual indicator" is the element that produces a visual signal, such as a light or display. The "lug" is a projection or extension from the main body that can be detached.

The advantage of this configuration lies in the versatility of the indicator device. The removable lug allows for various configurations and adaptations, enhancing the flexibility of the indicator device in different installation scenarios.

According to an embodiment, the indicator device features a lug connected to the main body through at least one breaking point or breaking groove. This specific mechanism of communication between the lug and the main body allows for easy removal of the lug, facilitating the installation and customization of the indicator device. Additionally, an alternative embodiment includes lugs that are reattachable to the main body, providing flexibility in reconfiguring the device as needed. This reattachable nature of the lugs allows for repeated use and reconfiguration of the indicator device, enhancing its versatility and longevity.

Furthermore, the switching device may comprise an aesthetic cover that can be provided with an aperture or casement aligned with the window or opening, enhancing the visual appeal and integration of the indicator device with the wall-mounted switching device.

According to an embodiment, the main body that comprises at least one latching element configured to snap onto a frame of the switching device, particularly an inner edge of the frame, to fasten the indicator device to the switching device. This latching mechanism provides a secure and reliable attachment, ensuring that the indicator device remains firmly in place during operation. Additionally, the latching element facilitates easy installation and removal, allowing for convenient maintenance or replacement of the indicator device without the need for specialized tools.

According to an embodiment, the indicator device is characterized by two power supply wires for supplying power to the visual indicator and configured to be connected to a terminal block of the switching device. The specific mechanisms of communication between components in this embodiment involve the power supply wires facilitating the transfer of electrical power from the terminal block of the switching device to the visual indicator, thereby enabling the visual indicator to function effectively. The new feature of incorporating two power supply wires brings the advantage of ensuring a reliable and consistent power supply to the visual indicator. Furthermore, the inclusion of these power supply wires simplifies the installation process by providing a straightforward method of connecting the indicator device to the existing electrical infrastructure of the switching device. This design consideration enhances the overall usability and compatibility of the indicator device with various types of wall-mounted switching devices. Additionally, the presence of two power supply wires may offer various possibilities of electrical connection to the switching device, each of those possibilities implementing a different function of the visual indicator. Those functions may include a first mode, also referred to as "always on function", where the visual indicator is lit irrespective of the state of the switch it is associated with, a second mode, also referred to as a "control light function", where the indicator is lit when the state of the switch it is associated with is closed, and/or a third mode, also referred to as an "inverted control light function", where the indicator is lit when the state of the switch it is associated with is opened. The second and third modes allow to visually indicate the state of the switch to a user for instance. A further advantage of the two power supply wires lies in its ability to provide a dependable, versatile and user-friendly solution for powering the visual indicator, thereby improving the overall functionality and reliability of the wall-mounted switching device.

According to an embodiment, the indicator device is characterized by the housing comprising two lugs, which are preferably identical or symmetrical in shape. This symmetry allows for an easier centric positioning of a single indicator device, ensuring that the device can be accurately and consistently aligned within the wall-mounted switching device. Additionally, the symmetry may be a linear reflectional symmetry, a point reflection symmetry, or a rotational symmetry, providing various design options to suit different aesthetic and functional requirements. These features collectively enhance the versatility, ease of installation, and aesthetic integration of the indicator device within various wall-mounted switching devices, catering to a wide range of user preferences and installation scenarios.

According to an embodiment, the indicator device is characterized in that the housing extends in a width direction which is parallel to the front face. These features ensure that the device maintains a streamlined and cohesive appearance when mounted on a wall, thereby enhancing the aesthetic integration of the indicator device with the switching device. Additionally, the parallel alignment facilitates easier installation and alignment with other components of the switching device, ensuring that the visual indicator is prominently and correctly displayed through the aperture or casement. The new feature of extending in a width direction parallel to the front face brings the advantage of a more uniform and visually appealing installation, which can be particularly beneficial in environments where the aesthetic presentation of wall-mounted devices is important. Furthermore, this alignment can contribute to a more intuitive user interaction, as the visual indicator will be consistently positioned in a predictable manner relative to the front face of the switching device.

According to an embodiment, the indicator device is characterized by the two lugs being connected to the main body on two sides of the main body which are opposed to each other in the width direction. This configuration provides a balanced and symmetric design, which facilitates easier and more precise centric positioning of a single indicator device within the wall-mounted switching device. The symmetry of the lugs can be a linear reflectional symmetry, a point reflection symmetry, or a rotational symmetry, offering various aesthetic and functional benefits.

According to an embodiment, the indicator device is characterized in that the dimension of the housing in the width direction is approximately double the dimension of the main body in the width direction. This feature provides the advantage that two indicator devices connected to one another, where the lugs have been removed from the main body of both devices, have the same width as a single indicator device with the lugs still attached to the main body. This configuration allows both setups to be installed in the same space of the wall-mounted switching device, thereby providing flexibility in installation options without requiring additional space or modifications to the existing setup.

According to an embodiment, the indicator device comprises corresponding mating parts on two sides of the main body which are opposed to each other in the width direction. The mating parts serve to connect two indicator devices together to form a single unit for a double rocker switch. This feature provides the advantage of enabling the seamless integration of two indicator devices into a single unit, thereby facilitating the use of the indicator device in double rocker switching devices without requiring additional modifications. Additionally, the mating parts ensure a secure and stable connection between the two indicator devices, enhancing the overall durability and reliability of the assembly.

According to an embodiment, the indicator device is characterized by the corresponding mating parts being dovetail shaped. This specific mechanism of communication between components allows for a secure and precise connection, enhancing the structural integrity and alignment of the indicator device when assembled. The dovetail shape of the mating parts ensures that the components fit together snugly, reducing the likelihood of misalignment or disconnection during use. This feature brings the advantage of increased stability and durability to the indicator device, ensuring that the visual indicator remains properly positioned within the main body and aligned with the window or opening. Additionally, the dovetail connection facilitates easier assembly and disassembly of the device, allowing for more efficient maintenance or replacement of parts. Furthermore, the use of dovetail-shaped mating parts can contribute to a more streamlined and aesthetically pleasing design, as the connection points are less visible and the overall appearance of the device is more cohesive. This design choice not only enhances the functional aspects of the indicator device but also improves its visual appeal, making it more suitable for use in various settings where both performance and appearance are important.

The present invention also relates to a wall-mounted switch, in particular a single-rocker or double-rocker switch, comprising a switching device and one or two indicator devices according to the present invention.

Finally, the invention relates to a method for assembling a wall-mounted switch. The method involves providing a switching device and one or two indicator devices according to the invention, which are then fastened to the switching device, particularly to a frame of the switching device. This fastening process ensures that the indicator devices are securely attached to the switching device, allowing for a reliable and stable connection.

According to an embodiment, the method involves connecting two power supply wires of each indicator device to a respective terminal block of the switching device. This step is preferably executed after the one or two indicator devices have been fastened to the frame. The new feature of connecting two power supply wires to a respective terminal block brings several advantages. Firstly, it allows for a more reliable and stable electrical connection, reducing the risk of power interruptions or failures. Secondly, it simplifies the installation process by providing a clear and straightforward method for integrating the indicator devices into the switching device. This can be particularly beneficial in complex installations where multiple indicator devices are used, as it ensures that each device is correctly and securely connected to the power supply. Additionally, this method can enhance the overall safety of the installation by minimizing the potential for loose or faulty connections, which could otherwise lead to electrical hazards. Furthermore, the use of terminal blocks can facilitate easier maintenance and troubleshooting, as each connection point is clearly defined and accessible. This can save time and effort when diagnosing and resolving any issues that may arise. The two power supply wires being connectable to a respective terminal block offers various possibilities of electrical connection to the switching device, each of those possibilities implementing a different function of the visual indicator. Those functions may include a first mode, also referred to as "always on" mode, where the visual indicator is lit irrespective of the state of the switch it is associated with, a second mode, where the indicator is lit when the state of the switch it is associated with is closed, and/or a third mode, where the indicator is lit when the state of the switch it is associated with is opened. The second and third modes allow to visually indicate the state of the switch to a user for instance. When two indicator devices are installed, each of the indicator devices may implement a different function of the aforementioned functions. Overall, these features contribute to a more efficient, reliable, and safe installation of indicator devices within wall-mounted switching devices.

According to an embodiment, the method involves a double rocker switching device, wherein two indicator devices are provided and attached to one another by means of corresponding mating parts before being fastened to the switching device. Prior to that step, the lug(s) may be removed from the main body of each of the two indicator devices. The specific step of the method includes the use of mating parts that facilitate the attachment of the two indicator devices to form a single unit. This method brings several new features and advantages. Firstly, the use of mating parts to connect the two indicator devices ensures a secure and stable attachment, which is crucial for the reliable operation of the switching device. Additionally, this configuration allows for the two indicator devices to be treated as a single unit, simplifying the installation process and reducing the potential for misalignment or improper attachment. The advantage of this feature is that it provides flexibility in installation options without requiring additional space or modifications to the existing setup, as the combined width of the two indicator devices, with the lugs removed, matches the width of a single indicator device with the lugs still attached. This ensures that both configurations can be installed in the same space of the wall-mounted switching device. Furthermore, the method enhances the versatility of the switching device by allowing it to accommodate different indicator configurations, thereby catering to various user preferences and requirements. The ability to attach two indicator devices together also facilitates easier centric positioning.. Additionally, the switching device may comprise an aesthetic cover that can be provided with two apertures or casements aligned with the window or opening of each of the two indicator devices, further enhancing the visual appeal and integration of the indicator device within the overall design of the switching device. Overall, the method described introduces significant improvements in terms of installation flexibility, ease of use, and aesthetic integration, making it a valuable enhancement to the wall-mounted switching device.
Figure 1: shows a perspective view of an indicator device according to an embodiment, with a housing, main body, a latching element, two lugs, breaking points, a visual indicator, and power supply wires.
Figure 2: shows another perspective view of the indicator device according to the embodiment.
Figure 3: shows a top view of the indicator device according to the embodiment.
Figure 4: shows a side view of the indicator device according to the embodiment.
Figure 5: shows a front view of the indicator device according to the embodiment.
Figure 6: shows a switching device with the indicator device according to the embodiment attached to its frame, highlighting the frame, an inner edge of the frame, and various components of the switching device.
Figure 7: shows the embodiment of the indicator device being aligned with the frame of the switching device before snapping on.
Figure 8: shows the embodiment of the indicator device partially snapped onto the frame of the switching device.
Figure 9: shows the embodiment of the indicator device fully snapped onto the frame of the switching device.
Figure 10: shows a bottom perspective view of the switching device with the indicator device according to the embodiment attached to its frame.
Figure 11: shows two indicator devices according to the embodiment attached to one another through corresponding mating parts of the main body of the housing.
Figure 12: shows a wall-mounted switch having a double-rocker switching device with two indicator devices snapped onto the frame of the switching device.
Figure 13 shows a standard norm layout of a single pole single throw switch.
Figure 14 shows an electric scheme of the single pole single throw switch with a luminaire.
Figure 15 shows a schematic diagram representing a terminal block of the switching device to which the wires of the indicator device have been connected to perform an inverted control light function.
Figure 16 shows an electric scheme of the single pole single throw switch with the luminaire and the indicator device connected to perform the inverted control light function.
Figure 17 shows a schematic diagram representing the terminal block of the switching device to which the wires of the indicator device have been connected to perform a control light function.
Figure 18 shows an electric scheme of the single pole single throw switch with the luminaire and the indicator device connected to perform the control light function.
Figure 19 shows a schematic diagram representing the terminal block of the switching device to which the wires of the indicator device have been connected to perform an always on function.
Figure 20 shows an electric scheme of the single pole single throw switch with the luminaire and the indicator device connected to perform the always on function.
Figure 21 shows a standard norm layout of a single pole double throw switch.
Figure 22 shows an electric scheme of the single pole double throw switch with the luminaire in a two way circuit wiring.
Figure 23 shows a schematic diagram representing the terminal block of the switching device to which the wires of the indicator device have been connected to perform the inverted control light function.
Figure 24 shows an electric scheme of the single pole double throw switch with the luminaire and the indicator device connected to perform the inverted control light function.
Figure 25 shows a schematic diagram representing the terminal block of the switching device to which the wires of the indicator device have been connected to perform the control light function.
Figure 26 shows an electric scheme of the single pole double throw switch with the luminaire and the indicator device connected to perform the control light function.
Figure 27 shows a schematic diagram representing the terminal block of the switching device to which the wires of the indicator device have been connected to perform the always on function.
Figure 28 shows an electric scheme of the single pole double throw switch with the luminaire and the indicator device connected to perform the always on function.

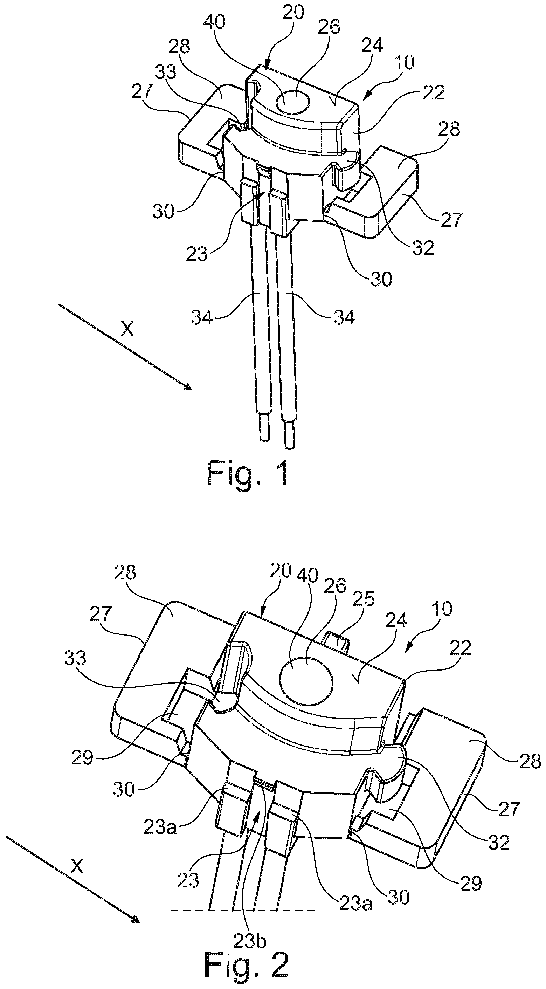

Figures 1 and 2 illustrate an indicator device 10 for a wall-mounted switching device 1 according to the embodiment. The indicator device 10 comprises a housing 20 with a main body 22. The main body 22 has a front face 24 which is provided with a window or opening 26. Within the main body 22, a visual indicator 40 is arranged to face the window or opening 26.

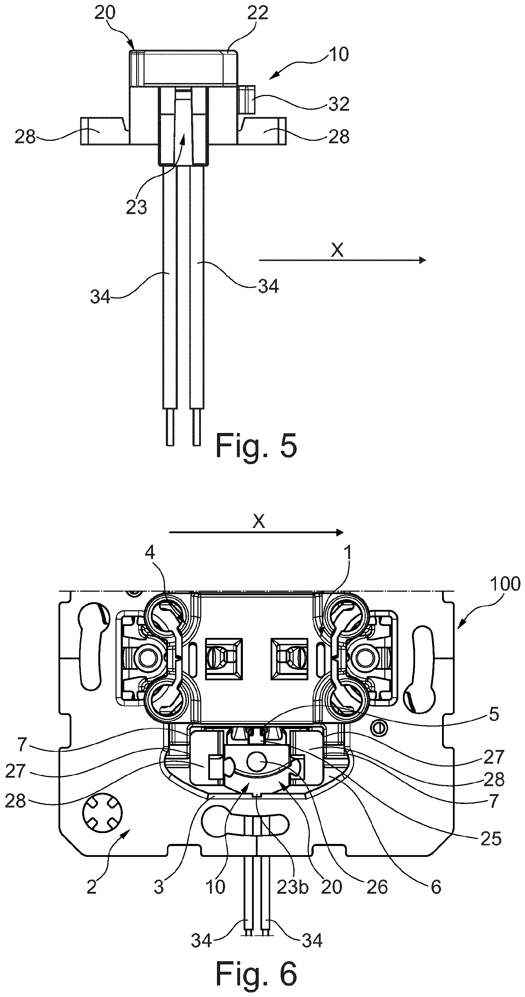

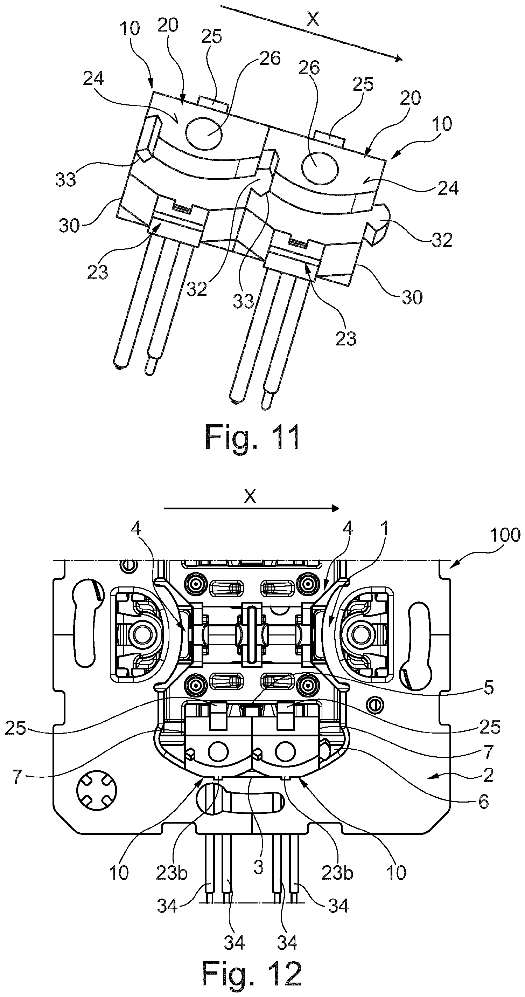

The switching device 1 is represented in figures 6 to 10 as a single-rocker switching device 1 and in figure 12 as a double-rocker switching device 1. The single-rocker switching device 1 comprises one switching module 4 and the double-rocker switching device 1 comprises two switching modules 4. Each switching module 4 may be associated with a single indicator device 10. Either a single-rocker switching device 1 associated with a single indicator device 10 or a double-rocker switching device 1 associated with a two indicator devices 10 form a wall-mounted switch 100. The switching device 1 may be provided with an abutment face 5 and two lateral abutment faces 7. The switching device 1 comprises a terminal block 8.

Usually, the switching device 1 controls a luminaire 200 connected in series with the switching device 1.

The switching device 1 may further comprise a frame 2 which is preferably made of sheet metal. The frame 2 features an opening 6 which delimits an inner edge 3 of the frame 2.

Additionally, the switching device 1 may further be provided with an aesthetic cover (not shown in the figures) having at least one aperture or casement aligned with the window or opening 26.

In Figure 1, the housing 20 includes at least one lug 28 connected to the main body 22. The lug 28 is designed to be removable from the main body 22. The connection between the lug 28 and the main body 22 is facilitated through at least one breaking point 30 or breaking groove. The main body 22 further comprises at least one latching element 23 configured to snap onto the frame 2 of the switching device 1, specifically the inner edge 3 of the frame 2, to fasten the indicator device 10 to the switching device 1. The housing 20 also includes two power supply wires 34 for supplying power to the visual indicator 40. These wires 34 are configured to be connected to the terminal block 8 of the switching device 1.

According to the depicted embodiment, the housing 20 extends in a width direction X, which is parallel to the front face 24. The housing 20 comprises two lugs 28, which are preferably identical or symmetrical in shape. These lugs 28 are connected to the main body 22 on two sides of the main body 22, which are opposed to each other in the width direction X. The dimension of the housing 20 in the width direction X is approximately double the dimension of the main body 22 in the width direction X. The main body 22 comprises corresponding mating parts 32, 33 on two sides of the main body 22, which are opposed to each other in the width direction X. These corresponding mating parts 32, 33 are dovetail-shaped. The lugs 28 comprise a cut-out portion 29, which is arranged in the vicinity of the breaking point 30 and/or the mating parts 32, 33. The cut-out portion 29 facilitates a pivoting motion of the lug 30 around the breaking point 30 to remove the lug 28 from the main body 22 and prevents an obstruction by the mating parts 32, 33 during the pivoting motion of the lug 28 around the breaking point 30. The cut-out portion may accommodate the mating part 32, 33during such a pivoting motion.

Figure 2 provides a different perspective of the indicator device 10, showing additional details of the components. The main body 22 includes a stop 25 opposite the front face 24. The latching element 23 is shown with its latching surfaces 23a and 23b, which are designed to engage with the frame 2 of the switching device 1, in particular the inner edge 3 of the frame 2. First latching surfaces 23a are configured to sit on a lower side of the inner edge 3 of the frame 2 and a second latching surface 23b is configured to sit on an upper side of the inner edge 3 of the frame 2. The breaking points 30 are clearly visible, indicating the areas where the lugs 28 can be detached from the main body 22. The dovetail-shaped mating parts 32, 33 are also visible, showing how they facilitate the connection between the main body 22 of two juxtaposed indicator devices 10 where the lugs 28 have been removed.

The visual indicator 40 is centrally located within the main body 22, facing the window or opening 26 on the front face 24. The power supply wires 34 extend from the main body 22, providing the necessary electrical connection to the terminal block 8 of the switching device 1.

Overall, the figures depict a well-structured indicator device 10 designed for easy installation and removal, with clear provisions for electrical connections and secure fastening to a wall-mounted switching device 1. The use of removable lugs 28 and dovetail-shaped mating parts 32, 33 ensures flexibility and adaptability in various installation scenarios.

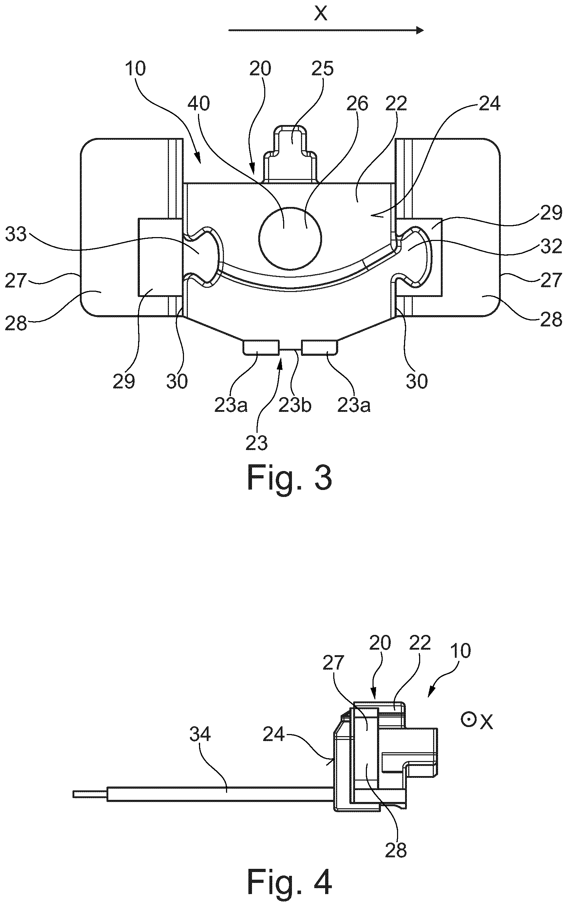

Figure 3 depicts a top view of the embodiment of the indicator whereas figure 4 provides a side view of the indicator device 10 according to the embodiment. Figures 3 and 4 further detail the housing 20 and main body 22. The front face 24 is visible, along with the window or opening 26. The lug 28 is shown extending from the main body 22 in the width direction X. The indicator device 10 also includes power supply wires 34, which supply power to the visual indicator 40. These wires 34 are configured to be connected to the terminal block 8 of the switching device 1.

The combination of these components ensures that the indicator device 10 can be securely attached to a wall-mounted switching device 1, providing a clear visual indication through the window or opening 26. The removable lugs 28 and the dovetail-shaped mating parts 32 and 33 facilitate easy installation and removal, while the power supply wires 34 ensure consistent power delivery to the visual indicator 40.

Figure 5 shows front view of the indicator device 10 according to the embodiment. As can be seen in particular in said figure 5, the housing 20 comprises two lugs 28, which are identical or symmetrical in shape. The two lugs 28 are connected to the main body 22 on the two sides of the main body 22, which are opposed to each other in the width direction X. The dimension of the housing 20 in the width direction X is approximately double the dimension of the main body 22 in the width direction X. That is, the dimension of the main body 22 and the lugs 28 attached thereto in the width direction X is approximately double the dimension of the main body 22 on its own in the width direction X.

Figure 6 illustrates a wall-mounted switching device 1, which includes a frame 2 with an inner edge 3. The frame 2 houses the switching device 1, which includes a single switching module 4. The indicator device 10 is fastened to the frame 2 of the switching device 1. The housing 20 of the indicator device 10 is shown with its main body 22 and front face 24. The window or opening 26 is visible on the front face 24. The latching element 23 is engaged with the inner edge 3 of the frame 2 to secure the indicator device 10 in place. The stop 25 rests against abutment face 5. The two lugs 28 are shown connected to the main body 22 on two sides, which are opposed to each other in the width direction X. Outer edges 27 of the lugs 28 rest against the lateral abutment faces 7 of the switching device 1. The power supply wires 34 extend from the housing 20 and are connected to the terminal block 8 of the switching device 1. The corresponding mating parts 32 on the main body 22 are also visible. The frame 3 of the switching device 1 comprises fixation holes configured to receive screws, which are used to secure the frame 2 and the switching device 1 onto a fitting. The indicator device 10 is positioned in such a way that the visual indicator 40 is aligned with the window or opening 26 on the front face 24 of the main body 22. The switch 100 is designed to be mounted on a wall, in particular to a fitting on the wall, with the indicator device 10 providing a visual indication through the window or opening 26 and/or through the aperture or casement.

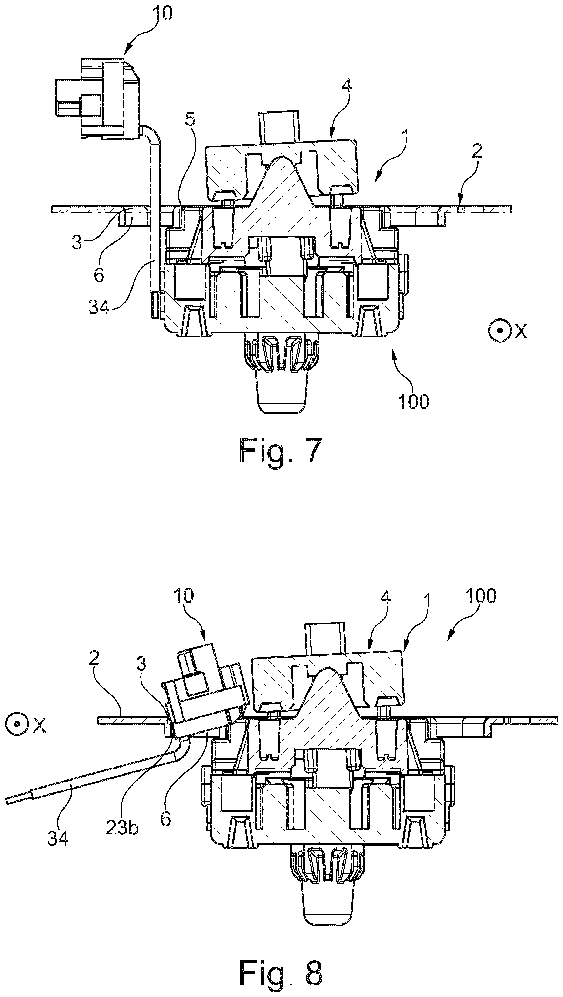

Figures 7 to 9 visualize how the indicator device according to the embodiment is fastened to the switching device 1.

As depicted in Figure 7, the indicator device 10 is mounted on the frame 2 of the switching device 1, by first feeding the ends of the power supply wires 34 through the opening 6. The inner edge 3 of the frame 2 is visible, indicating the position where the indicator device 10 is to be latched onto the frame 2.

As further depicted in figure 8, the indicator device 10 is then inserted into the opening 6, thereby rotating the housing 20 around an axis of rotation which is parallel to the width direction X, and the second latching surface 23b is put to rest on the upper side of the inner edge 3 of the frame 2.

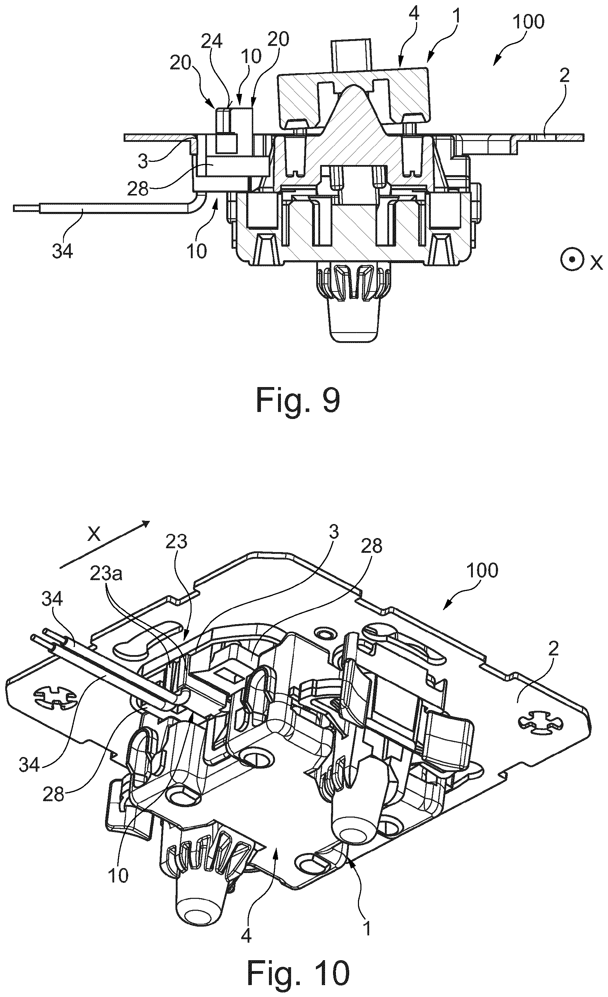

Starting from the position of the indicator device 10 depicted in figure 8, the housing 20 of the indicator device 10 is further rotated around the axis of rotation which is parallel to the width direction X until the first latching surfaces come to rest against the lower side of the inner edge 3 to attain a fastened position of the indicator device 10. The fastened position of the indicator device 10 is depicted in figure 9.

Figures 7 to 9 highlight the latching mechanism of the indicator device 10 onto the frame 2 of the switching device 1. The latching element 23 engages with the inner edge 3 of the frame 2, ensuring a secure attachment.

The figures also depict the width direction X, which is parallel to the front face of the main body 4.

Figure 10 provides a perspective view of the wall-mounted switching device 1 with the indicator device 10 installed. The frame 2 of the switching device 1 is clearly visible, along with the inner edge 3 to which the latching elements 23 of the main body 22 are attached. The latching elements 23 are shown in greater detail, with first latching surfaces 23a visible, providing a secure attachment to the frame 2. The housing 20 of the indicator device 10 includes two lugs 28, which are positioned on opposite sides of the main body 22 in the width direction X. These lugs 28 are designed to be removable, likely through breaking points or grooves not explicitly shown in the figure. The perspective view also highlights the overall arrangement and integration of the components within the switching device 1. The figure emphasizes the modularity and ease of assembly of the indicator device 10 with the switching device 1, facilitated by the latching element 23 and the removable lugs 28.

Figure 11 illustrates two indicator devices 10 according to the embodiment. The two indicator devices 10 are connected to one another by means of the corresponding mating parts 32, 33.. Prior to connecting the two indicator devices 10 to one another, the lugs 28 have been removed from the main body 22 of each one of the two indicator devices 10.

Figure 12 illustrates a wall-mounted switch 1, which includes a switching device 1 and two indicator devices 10. The switching device 1 is a double-rocker switching device 1 and comprises a frame 2, with an inner edge 3 to which the indicator devices 10 are fastened. The latching elements 23 engage the inner edge 3 of the frame 2. Both indicator devices 10 connected to one another are fastened to the inner edge 2 of the frame 3 in a similar fashion as shown in figures 7 to 9 for the single indicator device 10 and the single-rocker switching device 1.

The figures collectively demonstrate the assembly and integration of the indicator devices 10 with the wall-mounted switch 1. The lugs 28 and breaking points 30 facilitate the removal and attachment of the indicator devices 10, while the latching elements 23 and mating parts 32, 33 ensure secure fastening and alignment. The power supply wires 34 provide the necessary electrical connections to power the visual indicators, completing the functional integration of the indicator devices 10 with the switching device 1.

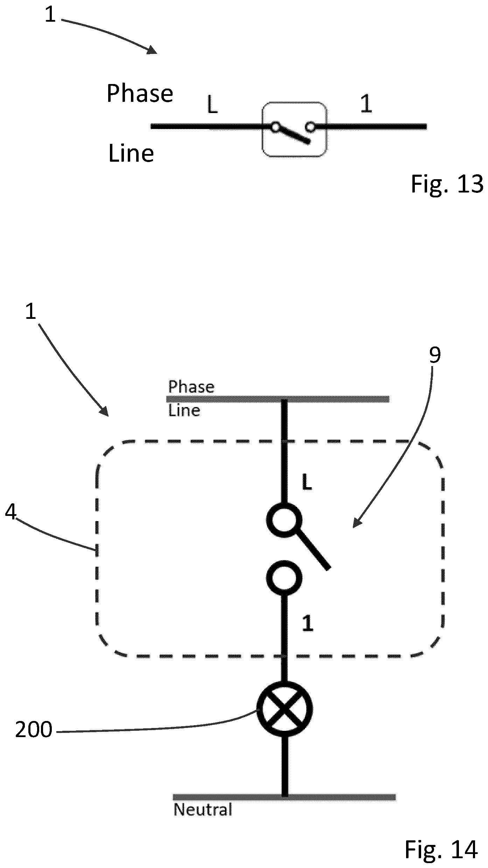

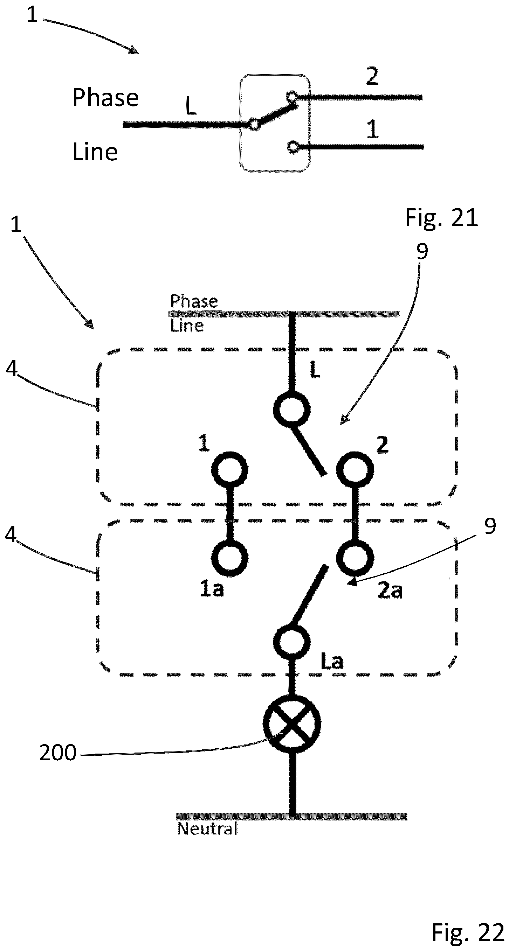

Figures 13 to 20 show examples of the wiring of the indicator device 10 to a single pole single throw switch 1 by connecting the power supply wires 34 to specific terminals of the terminal block 8 so that the indicator device 10 performs a specific function and figures 21 to 28 show other examples of such a wiring of the indicator device 10 to a single pole double throw switch 1.

Figure 13 represents a standard norm layout of a single pole single throw switch 1 whereas figure 14 shows an electric scheme of the single pole single throw switch 1 with a luminaire 200. The switch 1 controls the luminaire 200.

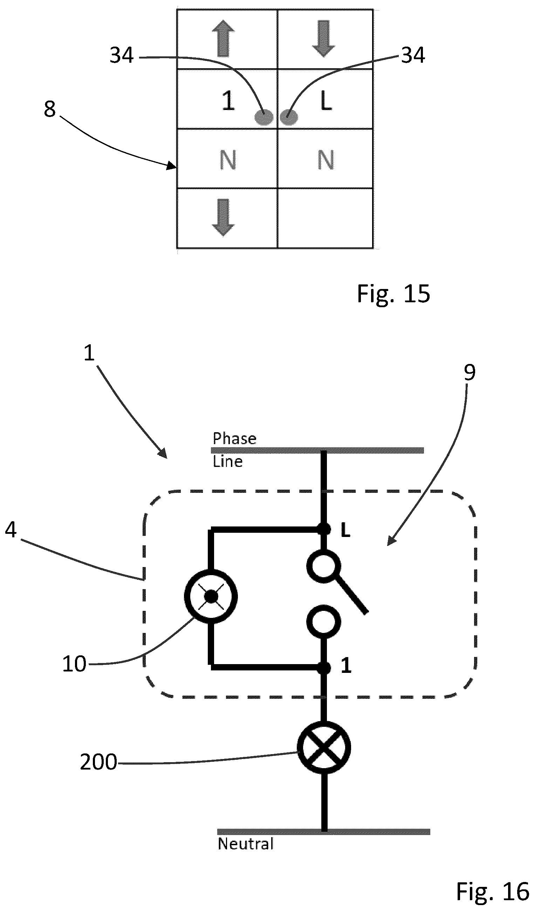

Figure 15 shows the wiring of the power supply wires 34 to the to specific terminals of the terminal block 8 to perform an inverted control light function, also referred to as a third mode. When the indicator device 10 performs the inverted control light function, the indicator device 10 is lit when the luminaire 200 is switched off. To perform the inverted control light function, the power supply wires 34 of the indicator device 10 are connected to terminals "1" and "L" of the terminal block 8. Figure 16 shows the resulting electric scheme of such a wiring. According to that electric scheme, the indicator device 10 is wired in parallel to a commutator 9 of the switching module 4.

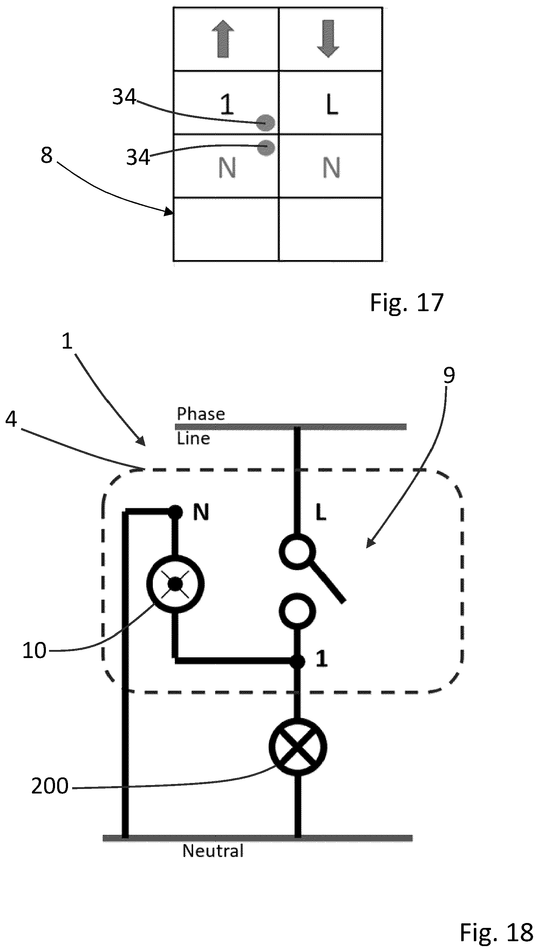

Figure 17 shows the wiring of the power supply wires 34 to the to specific terminals of the terminal block 8 to perform a control light function, also referred to as a second mode. When the indicator device 10 performs the control light function, the indicator device 10 is lit when the luminaire 200 is switched on. To perform the control light function, the power supply wires 34 of the indicator device 10 are connected to terminals "1" and "N" of the terminal block 8. Figure 18 shows the resulting electric scheme of such a wiring. According to that electric scheme, the indicator device 10 is wired in parallel to the luminaire 200.

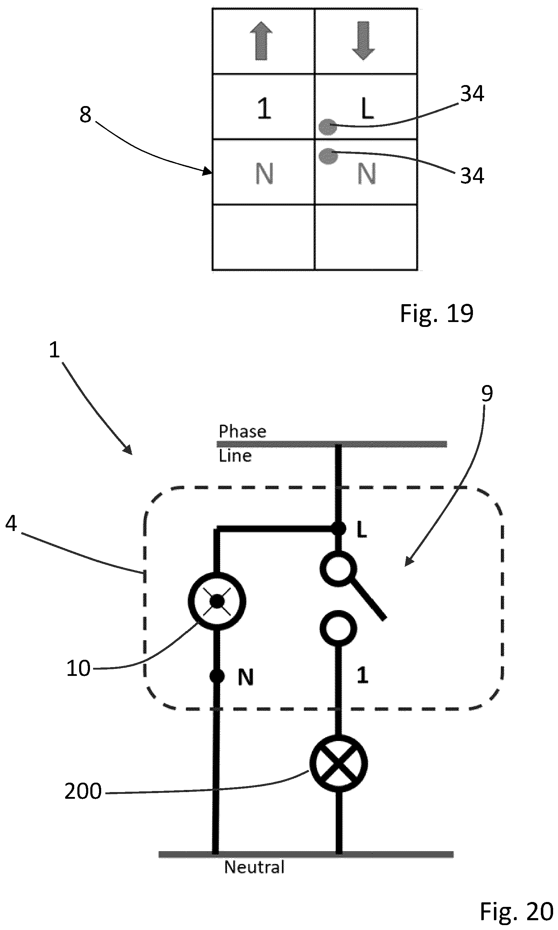

Figure 19 shows the wiring of the power supply wires 34 to the to specific terminals of the terminal block 8 to perform an always on function, also referred to as the first mode. When the indicator device 10 performs the always on function, the indicator device 10 is lit when the luminaire 200 is switched on. To perform the control light function, the power supply wires 34 of the indicator device 10 are connected to terminals "L" and "N" of the terminal block 8. Figure 20 shows the resulting electric scheme of such a wiring. According to that electric scheme, the indicator device 10 is wired in parallel to the luminaire 200 and to the commutator 9 of the switching module 4.

Figure 21 represents a standard norm layout of a single pole double throw switch 1 whereas figure 22 shows an electric scheme of the single pole double throw switch 1 in a two way circuit wiring with the luminaire 200. The switch 1 controls the luminaire 200.

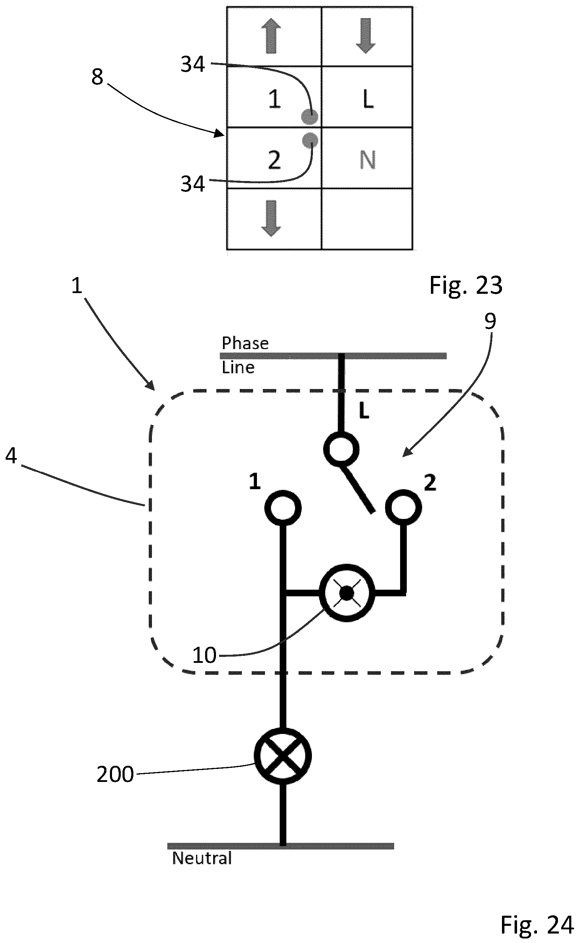

Figure 23 shows the wiring of the power supply wires 34 to the to specific terminals of the terminal block 8 to perform the inverted control light function, also referred to as the third mode. To perform the inverted control light function, the power supply wires 34 of the indicator device 10 are connected to terminals "1" and "2" of the terminal block 8. Figure 24 shows the resulting electric scheme of such a wiring.

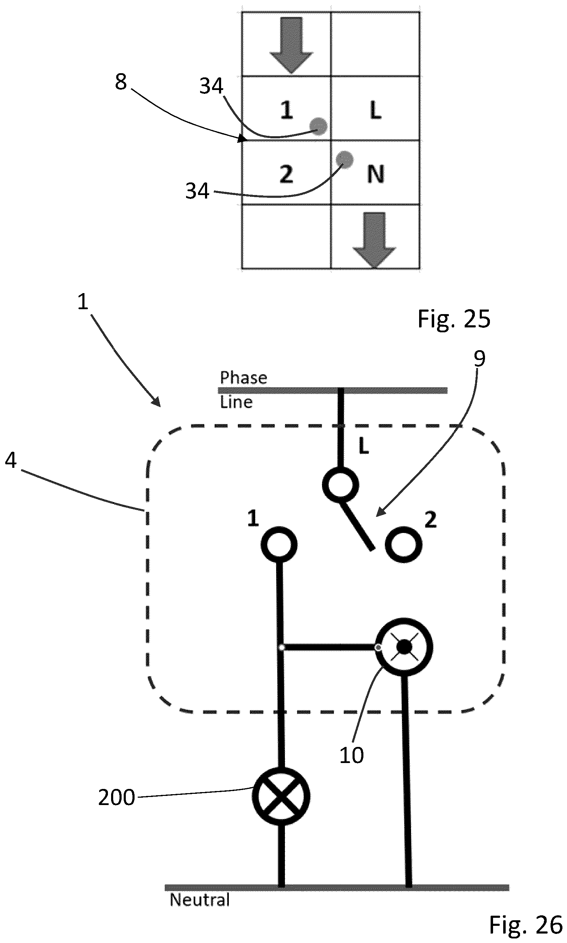

Figure 25 shows the wiring of the power supply wires 34 to the to specific terminals of the terminal block 8 to perform the control light function, also referred to as the second mode. To perform the control light function, the power supply wires 34 of the indicator device 10 are connected to terminals "1" and "N" of the terminal block 8. Figure 26 shows the resulting electric scheme of such a wiring. According to that electric scheme, the indicator device 10 is wired in parallel to the luminaire 200.

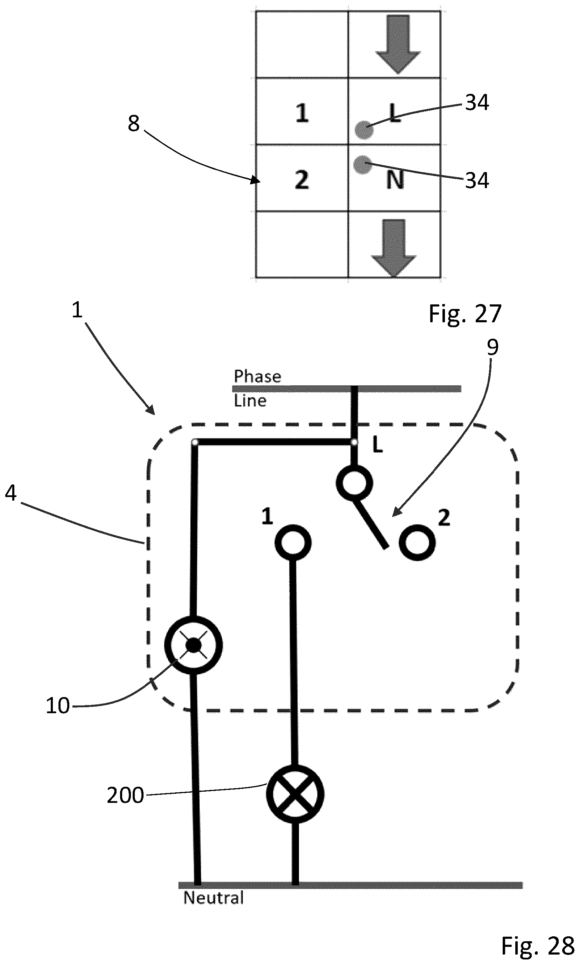

Figure 27 shows the wiring of the power supply wires 34 to the to specific terminals of the terminal block 8 to perform the always on function, also referred to as the first mode. To perform the control light function, the power supply wires 34 of the indicator device 10 are connected to terminals "L" and "N" of the terminal block 8. Figure 28 shows the resulting electric scheme of such a wiring. According to that electric scheme, the indicator device 10 is wired in parallel to the luminaire 200 and to the commutator 9 of the switching module 4.

## Claims

1. Indicator device for a wall-mounted switching device (1), in particular for a single-rocker or double-rocker switching device, comprising a housing (20) having a main body (22), the main body (22) having a front face (24) provided with a window or opening (26), the indicator device further comprising a visual indicator (40) arranged within the main body (22) such as to face the window or opening (26), **characterized in that** the housing (20) comprises at least one lug (28) which is connected to the main body (22) and which is removable from the main body (22).

2. Indicator device according to claim 1, **characterized in that** the lug (28) is connected to the main body (22) through at least one breaking point (30) or breaking groove.

3. Indicator device according to any one of claims 1 or 2, **characterized in that** the main body (22) comprises at least one latching element (23) configured to snap on a frame (2) of the switching device (1), in particular an inner edge (3) of the frame (2) of the switching device (1), to fasten the indicator device to the switching device (1).

4. Indicator device according to any one of claims 1 to 3, **characterized by** two power supply wires (34) for supplying power to the visual indicator (40) and configured to be connected to a terminal block (8) of the switching device (1).

5. Indicator device according to any one of claims 1 to 4, **characterized in that** the housing (20) comprises two lugs (28), the two lugs (28) preferably being identical or symmetrical in shape.

6. Indicator device according to any one of claims 1 to 5, **characterized in that** the housing (20) extends in a width direction (X) which is parallel to the front face (24).

7. Indicator device according to a combination of claims 5 and 6, **characterized in that** the two lugs (28) are connected to the main body (22) on two sides of the main body (22) which are opposed to each other in the width direction (X).

8. Indicator device according to any one of claims 6 or 7, **characterized in that** the dimension of the housing (20) in the width direction (X) is approximately double the dimension of the main body (22) in the width direction (X).

9. Indicator device according to any one of claims 6 to 8, **characterized in that** the main body (22) comprises corresponding mating parts (32, 33) on two sides of the main body (22) which are opposed to each other in the width direction (X).

10. Indicator device according to claim 9, **characterized in that** the corresponding mating parts (32, 33) are dovetail shaped.

11. Wall-mounted switch (100), in particular single-rocker or double-rocker switch, comprising a switching device (1) and one or two indicator devices (10) according to any one of the claims 1 to 10.

12. Method for assembling a wall-mounted switch (100) according to claim 11, comprising the following steps:
a. providing a switching device (1);
b. providing one or two indicator devices (10) according to any one of the claims 1 to 10; and
c. fastening the one or two indicator devices (10) to the switching device, in particular to a frame (2) of the switching device (1).

13. Method according to claim 12, **characterized by** the following subsequent step:
d. connecting two power supply wires (34) of each indicator device (10) to a respective terminal block (8) of the switching device (1).

14. Method according to any one of the claims 12 or 13, the switching device (1) being a double rocker switching device (1), **characterized in that** two indicator devices (10) are provided in step b., the two indicator devices (10) being indicator devices according to any one of the claims 9 or 10, the two indicator devices (10) being attached to one another by means of the corresponding mating parts (32, 33) before being fastened to the switching device (1).
